(19) Europäisches Patentamt
European Patent Office
Office européen des brevets

(11) **EP 4 711 970 A1**

(12) **EUROPEAN PATENT APPLICATION**
published in accordance with Art. 153(4) EPC

(43) Date of publication:
**18.03.2026 Bulletin 2026/12**

(21) Application number: **24823260.5**

(22) Date of filing: **03.06.2024**

(51) International Patent Classification (IPC):
$G06F\ 30/20^{(2020.01)}$ $\quad B63B\ 25/16^{(2006.01)}$
$B63B\ 79/10^{(2020.01)}$ $\quad B63B\ 79/30^{(2020.01)}$
$F17C\ 13/08^{(2006.01)}$ $\quad G01M\ 99/00^{(2011.01)}$

(52) Cooperative Patent Classification (CPC):
B63B 25/16; B63B 79/10; B63B 79/30;
F17C 13/08; G01M 99/00; G06F 30/20

(86) International application number:
**PCT/JP2024/020249**

(87) International publication number:
**WO 2024/257640 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 JP 2023096258**

(71) Applicant: **Kawasaki Jukogyo Kabushiki Kaisha
Kobe-shi, Hyogo 650-8670 (JP)**

(72) Inventors:
• **IMAI, Tatsuya
Kobe-shi, Hyogo 650-8670 (JP)**
• **SHIRATSUCHI, Toru
Kobe-shi, Hyogo 650-8670 (JP)**
• **UEDA, Yuichiro
Kobe-shi, Hyogo 650-8670 (JP)**

(74) Representative: **Arnold & Siedsma
Bezuidenhoutseweg 57
2594 AC The Hague (NL)**

(54) **INFORMATION PROCESSING METHOD, INFORMATION PROCESSING DEVICE, AND PROGRAM**

(57) An information processing device acquires analysis model information for performing state estimation of a structure and plan information including an installation location of a measuring instrument for measuring a physical quantity related to a state of the structure, calculates an index value of contribution degree of the installation location to accuracy of the state estimation based on the acquired analysis model information and the acquired plan information, and outputs result information including the calculated index value.

FIG.3

START

SP01 — ACQUIRE ANALYSIS MODEL INFORMATION, PLAN INFORMATION, AND COST INFORMATION

SP02 — CALCULATE INDEX VALUE

SP03 — CALCULATE COST VALUE

SP04 — OUTPUT RESULT INFORMATION

END

EP 4 711 970 A1

## Description

### Technical Field

The present disclosure relates to an information processing method, an information processing device, and a program.

### Background Art

Patent Literature 1 discloses a state estimation system related to a background art. The system is a system for estimating a state of a liquefied gas tank installed in a ship, and includes a measurement unit, a calculation unit, a data assimilation unit, and an evaluation unit. The measurement unit includes a measuring instrument that measures a state related to strength of the liquefied gas tank. The calculation unit calculates a state related to strength of the liquefied gas tank by a preliminary analysis model. The data assimilation unit updates the preliminary analysis model by data assimilation using a measurement result acquired by the measurement unit. The evaluation unit evaluates a state of the liquefied gas tank based on a calculation result output from the calculation unit.

In Patent Literature 1, optimization of an installation location of the measuring instrument is not studied in detail.

### Citation List

### Patent Literature

Patent Literature 1: WO 2022/145287 A

### Summary of Invention

An object of the present disclosure is to obtain an information processing method, an information processing device, and a program capable of optimizing an installation location of a measuring instrument.

An information processing method according to one aspect of the present disclosure includes, by an information processing device, acquiring analysis model information for performing state estimation of a structure and plan information including an installation location of a measuring instrument for measuring a physical quantity related to a state of the structure, calculating an index value of contribution degree of the installation location to accuracy of the state estimation based on the acquired analysis model information and the acquired plan information, and outputting result information including the calculated index value.

An information processing device according to another aspect of the present disclosure includes an acquisition unit that acquires analysis model information for performing state estimation of a structure and plan information including an installation location of a measuring instrument for measuring a physical quantity related to a state of the structure, a calculation unit that calculates an index value of contribution degree of the installation location to accuracy of the state estimation based on the analysis model information and the plan information acquired by the acquisition unit, and an output unit that outputs result information including the index value calculated by the calculation unit.

A program according to another aspect of the present disclosure causes an information processing device to function as acquiring means for acquiring analysis model information for performing state estimation of a structure and plan information including an installation location of a measuring instrument for measuring a physical quantity related to a state of the structure, calculating means for calculating an index value of contribution degree of the installation location to accuracy of the state estimation based on the analysis model information and the plan information acquired by the acquiring means, and outputting means for outputting result information including the index value calculated by the calculating means.

### Effect of the Invention

According to the present disclosure, it is possible to optimize an installation location of a measuring instrument by outputting an index value of contribution degree of an installation location of a measuring instrument to accuracy of state estimation of a structure.

### Brief Description of Drawings

FIG. 1 is a view illustrating a liquefied gas storage ship which is a ship to which a state estimation system is applied.

FIG. 2 is a diagram illustrating a configuration of a design support device according to an embodiment of the present disclosure.

FIG. 3 is a flowchart illustrating a flow of processing executed by an information processing unit.

FIG. 4 is a diagram illustrating an example of a screen representing result information in a simplified manner.

**Description of Embodiments**

Hereinafter, an embodiment of the present disclosure will be described in detail with reference to the drawings. Note that elements denoted by the same reference signs in different drawings represent the same or corresponding elements.

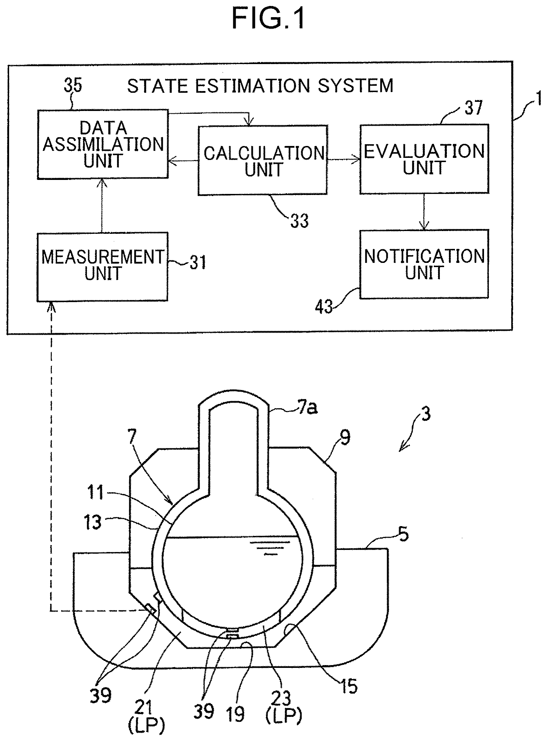

FIG. 1 illustrates a liquefied gas storage ship 3 which is a ship to which a marine liquefied gas tank state estimation system (hereinafter, simply referred to as "state estimation system") 1 is applied. The liquefied gas storage ship 3 includes a hull 5 that is floating on water and a liquefied gas tank (hereinafter, simply referred to as "tank") 7 that is installed on the hull 5 and stores liquefied gas.

Note that, in the present description, "liquefied gas storage ship" refers to a general ship having a function of storing liquefied gas. The liquefied gas storage ship 3 in the present embodiment is a liquefied gas transport vessel. However, in addition to a liquefied gas transport vessel, for example, a liquefied gas fuel vessel, a bunkering vessel that supplies liquefied gas to other vessels, and the like are included in the liquefied gas storage ship 3.

A pipe (not shown) for transferring liquefied gas between the tank 7 and the outside of the tank 7, for example, a liquefied gas storage base on land, is attached to the tank 7. In the illustrated example, the tank 7 has a dome portion 7a protruding upward, and one end of the pipe is attached to the dome portion 7a. The pipe extends from the inside of the tank 7 to the outside of the tank 7 through the dome portion 7a.

Liquefied gas stored in the tank 7 is, for example, liquefied petroleum gas (LPG, about -45°C), liquefied ethylene gas (LEG, about -100°C), liquefied natural gas (LNG, about -160°C), liquefied hydrogen (LH$_2$, about -250°C), liquefied helium (LHe, about -270°C), or the like.

In the present embodiment, liquefied hydrogen is stored in the tank 7.

In the present embodiment, two of the tanks 7 are installed on the hull 5 of the liquefied gas storage ship 3. These two of the tanks 7 are arranged in a longitudinal direction of the hull 5. However, the number of the tanks 7 mounted on the hull 5 may be one or three or more. Since each of the tanks 7 has the same configuration, only one of the tanks 7 will be described in the present description.

The tank 7 according to the illustrated example is the independent tank 7 formed independently of the hull 5. Further, the tank 7 has a barrel shape in which both end portions of a cylindrical shape bulge in a dome shape. An upper portion of the tank 7 is covered with a tank cover 9 provided integrally with the hull 5. Note that a shape of the tank 7 is not limited to this example, and may be, for example, a spherical shape or a square shape.

Further, in the present embodiment, the tank 7 is configured as a double shell tank 7 having an inner tank 11 and an outer tank 13. For example, a vacuum insulation layer is formed between the inner tank 11 and the outer tank 13. However, a configuration of the tank 7 is not limited to this example. For example, the tank 7 may be a single shell tank covered with a thermal insulation material. The thermal insulation material in this case may be constituted by, for example, a plurality of vacuum insulated panels or a plurality of foam panels.

A recessed portion 15 in which each of the tanks 7 is installed is formed in the hull 5, and the recessed portion 15 is divided into two cells by a partition wall 17 between the tanks 7. A pair of tank support members 21 are arranged on a bottom wall 19 of each cell. A pair of the tank support members 21 support the tank 7 at positions separated from each other in an axial direction of the tank 7. Each of the tank support members 21 protrudes from the bottom wall 19. The tank 7 is installed on the tank support member 21 so as to be supported in a state of being separated from each wall forming a cell of the hull 5. In the present embodiment, with such a configuration, the tank 7 is attached to the hull 5.

An inner tank support member 23 that supports the inner tank 11 is disposed between the inner tank 11 and the outer tank 13. In this example, the inner tank support member 23 is provided on an extension of the tank support member 21. The inner tank 11 and the outer tank 13 are connected by the inner tank support member 23. The inner tank 11 is supported by the hull 5 via the inner tank support member 23 and the outer tank 13. Note that the inner tank support member 23 may be provided so as to be fixed to only one of the inner tank 11 and the outer tank 13 and in contact with the other, or may be fixed to both. Further, the inner tank support member 23 does not need to be provided on an extension of the tank support member 21, and may be provided at a position shifted from the tank support member 21 in the longitudinal direction.

The mode of supporting the tank 7 with respect to the hull 5 is not limited to the example described above, and may be appropriately selected according to structures of the tank 7 and the hull 5. For example, in a case where the tank 7 has a spherical shape, the tank support member 21 having a cylindrical shape that supports the tank 7 with respect to the hull 5 and the inner tank support member 23 having a cylindrical shape interposed between the inner tank 11 and the outer tank

3

13 can be employed.

Next, a state estimation system 1 for estimating a state of the liquefied gas tank 7 having the above configuration and a state estimation method using the system will be described. As illustrated in FIG. 1, the state estimation system 1 includes a measurement unit 31, a calculation unit 33, a data assimilation unit 35, and an evaluation unit 37.

The measurement unit 31 includes a measuring instrument 39 that measures a physical quantity related to a state such as strength of the liquefied gas tank 7, and the measuring instrument 39 measures the physical quantity. The "state such as strength of the liquefied gas tank 7" measured by the measuring instrument 39 of the measurement unit 31 is, for example, degree of deformation (strain) of a target portion or cumulative fatigue damage. The measuring instrument 39 included in the measurement unit 31 is, for example, a strain sensor that measures degree of strain as the physical quantity or a fatigue sensor that measures an amount of cracking necessary for calculating cumulative fatigue damage as the physical quantity. The measuring instrument 39 may be a sensor that measures only one type of these parameters, or may be a plurality of types of sensors that measure a plurality of types.

In the present embodiment, the measuring instrument 39 is attached to a portion forming a load transfer path (hereinafter, simply referred to as "load transfer path") LP from the tank 7 to the hull 5. More specifically, in this example, the measuring instrument 39 is attached to the tank support member 21 and the inner tank support member 23 which are portions forming the load transfer path LP.

More specifically, for example, in the tank support member 21, the measuring instrument 39 is attached in the vicinity of a portion in contact with the tank 7 and in the vicinity of a portion connected to the hull 5. The measuring instrument 39 is attached, for example, in the vicinity of a portion in contact with the inner tank 11 and the outer tank 13 in the inner tank support member 23.

As described above, a state of the tank 7 can be efficiently measured by attaching the measuring instrument 39 to the load transfer path LP, which is a portion where decrease in strength due to fatigue is likely to occur. Note that a portion forming the load transfer path LP to which the measuring instrument 39 is attached is not limited to the tank support member 21 and the inner tank support member 23 exemplified above, and includes the vicinity of these members 21 and 23 in the hull 5 and the tank 7. Further, the measuring instrument 39 may be attached to another portion instead of or in addition to the load transfer path LP. Furthermore, the measuring instrument 39 may be attached to the hull 5 side to a portion that can affect strength of the tank 7. An installation location and the number of installation points of the measuring instruments 39 on the tank 7 or the hull 5 are optimized by a design support device 50 described later at a design stage.

The calculation unit 33 calculates a state related to strength of the tank 7 by a preliminary analysis model. The preliminary analysis model is an example of analysis model information for performing state estimation of a structure. Conditions such as material physical property, a boundary condition, and a load condition at the time of designing the hull 5 and the tank 7 are set in the preliminary analysis model. The calculation unit 33 calculates a state related to strength of the tank 7, such as stress and strain, by the preliminary analysis model.

The data assimilation unit 35 updates the preliminary analysis model by data assimilation using a measurement result acquired by the measurement unit 31. Data assimilation is a method of statistically correcting an uncertain factor of a numerical model by an actual measurement value. In the present embodiment, the data assimilation unit 35 compares the above-described various conditions and parameters set in a numerical analysis model used in the calculation unit 33 with a measurement result acquired by the measurement unit 31, and performs correction by using a measurement result when there is a significant difference, so as to update the preliminary analysis model.

The evaluation unit 37 evaluates a state of the liquefied gas tank 7 based on a calculation result output from the calculation unit 33. Specifically, the evaluation unit 37 calculates a value of cumulative fatigue damage based on a value of stress, strain, or the like output from the calculation unit 33, and evaluates whether or not repair is immediately required or an estimated period until repair is required.

In the present embodiment, the evaluation unit 37 performs evaluation related to strength of the tank 7, which is an estimation target, by structural reliability analysis. In the structural reliability analysis, a probability that fatigue damage, static fracture, brittle fracture, or the like occurs in a target structure during a predetermined period is calculated. In the example of the present embodiment, the evaluation unit 37 calculates a probability that fatigue damage occurs in the tank 7 during an assumed operation period by using the structural reliability analysis. As a specific method of the structural reliability analysis, for example, a generally known numerical integration method, Monte-Carlo simulation method, primary reliability evaluation method, secondary reliability evaluation method, high-order moment method, importance sampling method, response surface method, or the like can be used.

By performing evaluation using the structural reliability analysis in this manner, an evaluation result regarding a state of the tank 7 can be output as more practical information than necessity of repair or the like. However, evaluation of a state of the tank 7 by the evaluation unit 37 may be output as a determined value of cumulative fatigue damage without using the structural reliability analysis.

The state estimation system 1 may further include a notification unit 43 that notifies an evaluation result by the evaluation unit 37 by an appropriate method. The notification unit 43 is configured to display, for example, a warning that repair should be performed or a warning that stormy weather should be avoided according to degree of deterioration in fatigue strength and a probability that fatigue damage occurs within a predetermined short period of time.

Note that the tank 7 to which the state estimation system 1 and a state estimation method are applied is not limited to the above example. For example, the tank 7 may be a rectangular independent tank, or may be what is called a membrane type tank that is not independent but formed integrally with the hull 5. Further, the structure is not limited to the tank 7, and may be any structure.

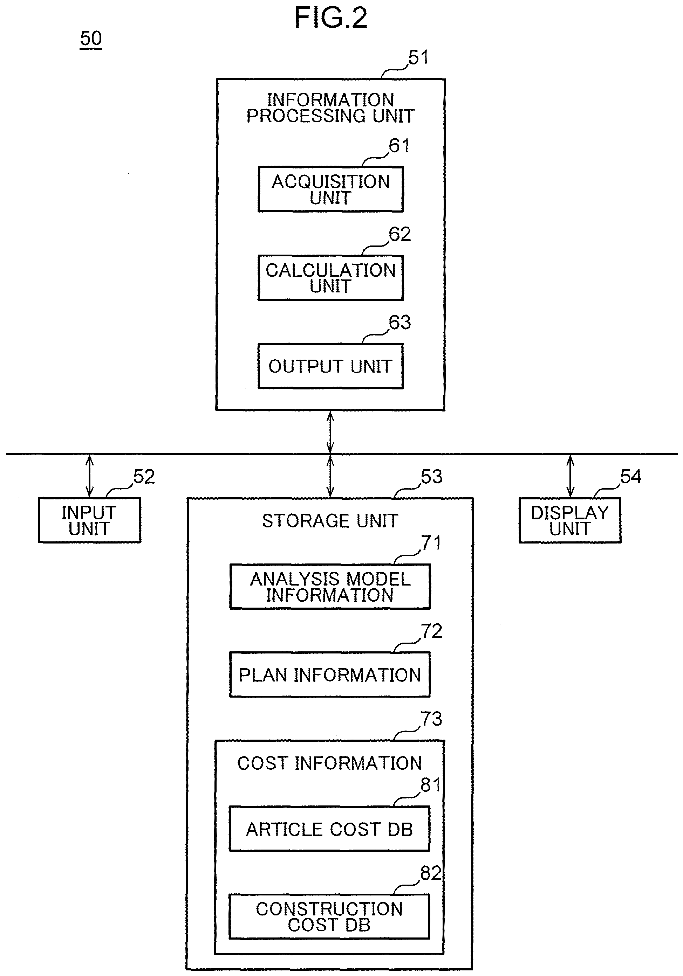

FIG. 2 is a diagram illustrating a configuration of the design support device 50 according to the embodiment of the present disclosure. The design support device 50 may be configured as a dedicated terminal, may be configured using a general-purpose computer, or may be configured as a server device. Further, functions of the design support device 50 may be implemented in a manner distributed to a plurality of these devices.

The design support device 50 includes an information processing unit 51, an input unit 52, a storage unit 53, and a display unit 54.

The input unit 52 is configured using any input device such as a mouse, a keyboard, or a touch panel.

The display unit 54 is configured using any display device such as a liquid crystal display or an organic EL display.

The storage unit 53 is configured using an HDD, an SSD, a semiconductor memory, or the like. The storage unit 53 stores analysis model information 71, plan information 72, and cost information 73. However, the cost information 73 may be omitted.

The analysis model information 71 is a model for performing state estimation of a structure, and corresponds to the above-described preliminary analysis model for estimating a state related to strength of the tank 7 in the present embodiment.

The plan information 72 includes design information related to planning of an installation location and the number of installation points of the measuring instruments 39. The plan information 72 includes a plurality of pieces of plan information in which at least one of an installation location and the number of installation points is different. However, by fixing the number of installation points for each installation location to a predetermined number (for example, "1"), information on the number of installation points may be omitted.

The cost information 73 is information on an installation cost necessary for installing the measuring instrument 39. The cost information 73 includes an article cost database (DB) 81 and a construction cost DB 82. The article cost DB 81 is a database indicating article cost according to a unit price of the measuring instrument 39, and article cost varies depending on a type of the measuring instrument 39. The construction cost DB 82 is a database indicating construction cost such as material cost and labor cost accompanying installation of the measuring instrument 39, and construction cost varies depending on an installation location of the measuring instrument 39.

The information processing unit 51 is configured using a processor such as a CPU. The information processing unit 51 includes an acquisition unit 61, a calculation unit 62, and an output unit 63 as functions implemented by a processor executing a program read from a nonvolatile recording medium such as a computer readable ROM. In other words, the program is a program for causing the information processing unit 51 as an information processing device mounted on the design support device 50 to function as the acquisition unit 61 (acquiring means), the calculation unit 62 (calculating means), and the output unit 63 (outputting means).

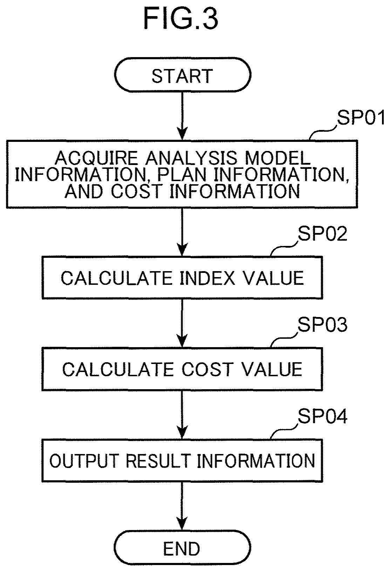

FIG. 3 is a flowchart illustrating a flow of processing executed by the information processing unit 51.

First, in Step SP01, the acquisition unit 61 acquires the analysis model information 71, the plan information 72, and the cost information 73 by reading them from the storage unit 53.

Next, in Step SP02, the calculation unit 62 calculates an index value of contribution degree of an installation location of the measuring instrument 39 to accuracy of state estimation of the analysis model information 71 based on the analysis model information 71 and the plan information 72 acquired by the acquisition unit 61. As will be described later, in the example of the present embodiment, the smallest eigenvalue of an empirical observability Gramian is used as the index value, but the present embodiment is not limited to this example.

Next, in Step SP03, the calculation unit 62 calculates a cost value necessary for installing the measuring instrument 39 according to the plan information 72 based on the cost information 73 and the plan information 72 acquired by the acquisition unit 61. Note that Step SP03 may be executed before Step SP02, or Step SP02 and Step SP03 may be simultaneously executed.

Next, in Step SP04, the output unit 63 generates and outputs result information including the index value and the cost value calculated by the calculation unit 62. The result information output by the output unit 63 is input to the display unit 54. In the example of the present embodiment, the result information is image data of a screen 90 including a graph displaying a correspondence relationship between the plan information 72, an index value, and a cost value, but is not limited to this example. The user can compare and examine a plurality of pieces of result information corresponding to a plurality of pieces of plan information by visually recognizing the screen 90 displayed on the display unit 54, and for example, by employing plan information in which the best result is obtained, an installation location and the number of installation points of the measuring instrument 39 can be optimized at a design stage.

Note that the configuration may be such that the calculation unit 62 calculates a weighted sum of an index value and a cost value using a weighting factor as an evaluation value, and the output unit 63 outputs the evaluation value to automatically select optimal plan information based on the evaluation value.

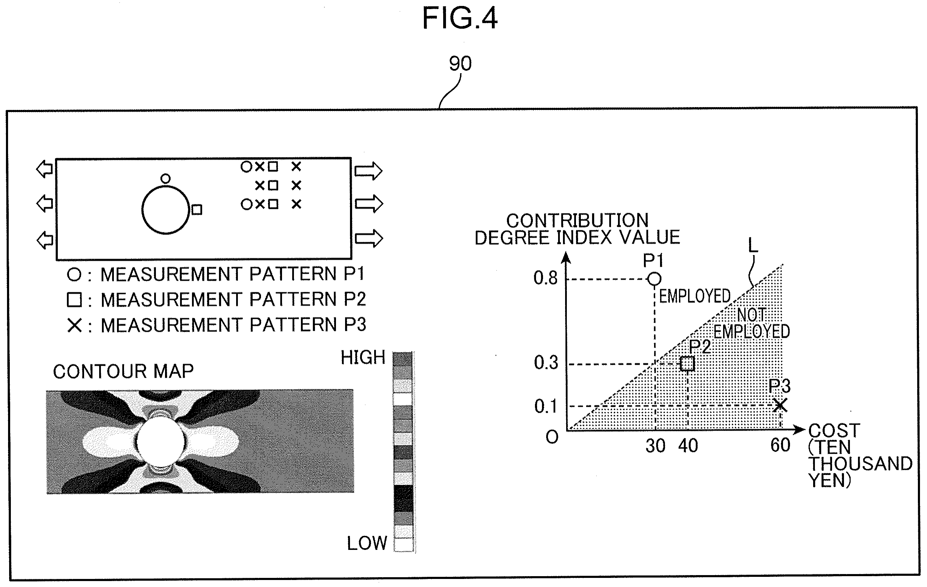

FIG. 4 is a diagram illustrating an example of the screen 90 representing result information in a simplified manner.

In an upper left region of the screen 90, a plurality of measurement patterns P1 to P3 corresponding to a plurality of pieces of plan information included in the plan information 72 are displayed. In this example, the measurement pattern P1 includes three of the measuring instruments 39 indicated by the ○ symbol, the measurement pattern P2 includes four of the measuring instruments 39 indicated by the □ symbol, and the measurement pattern P3 includes six of the measuring instruments 39 indicated by the × symbol.

In a lower left region of the screen 90, a contour map illustrating magnitude of contribution degree according to an installation location of the measuring instrument 39 by color coding is displayed.

In a right region of the screen 90, a graph obtained by plotting a result of each of the measurement patterns P1 to P3 with the horizontal axis as a cost value and the vertical axis as an index value of contribution degree is displayed. A straight line L passing through an origin O indicates a boundary line optionally set by the user. The user can employ plan information (in this example, the measurement pattern P1) in which a result is plotted in a region above the straight line L, and cannot employ plan information (in this example, the measurement patterns P2 and P3) in which a result is plotted in a region below the straight line L.

Hereinafter, a method of calculating an index value by the calculation unit 62 will be described in detail.

A state equation of a system is expressed by Equations (1) and (2).

[Formula 1]

$$x_t = f(x_{t-1}, v_t) \quad \cdots (1)$$

[Formula 2]

$$y_t = Hx_t + w_t \quad \cdots (2)$$

A state vector $x_t$ represents a state (node displacement, stress, or the like) at a certain time t.

A simulation model $f(\cdot)$ is, for example, an analysis model using a finite element method (FEM).

System noise $v_t$ is a vector representing simulation uncertainty.

An observation vector $y_t$ represents a vector obtained by extracting an observation value from $x_t$.

An observation matrix H is a matrix for extracting an observation value from $x_t$. An installation location of the measuring instrument 39 in each piece of plan information is given by the observation matrix H.

Observation noise $w_t$ represents observation uncertainty.

In a case of a linear system, Equation (1) is represented by a linear combination of Equation (3).

[Formula 3]

$$x_t = Ax_{t-1} + v_t \quad \cdots (3)$$

In this case, if an observability Gramian matrix $G_0$ of Equation (4) is invertible, it can be determined that state estimation is possible, and the relative performance of measurement points can be evaluated based on the magnitudes of eigenvalues of the observability Gramian matrix $G_0$. In Equation (4), $\tau$ represents an integration variable. Note that observability means an index for determining whether a state can be estimated from a measurement value in a system.

[Formula 4]

$$G_O = \int_0^t e^{A^T\tau} H^T H e^{A\tau} d\tau \quad \cdots (4)$$

On the other hand, in a case of a nonlinear system, an exact solution of the observability Gramian matrix $G_0$ is not obtained. Therefore, in a case of a nonlinear system, instead of the observability Gramian matrix $G_0$, an empirical observability Gramian matrix $G_0'$ expressed by Equation (5) is used, and for example, its minimum eigenvalue is used as an index value indicating degree of contribution to state estimation accuracy. Note that, as the index value, a minimum eigenvalue, a maximum eigenvalue, a trace, an average value of these, or the like of the empirical observability Gramian matrix $G_0'$ can be used, and may be optionally selected by the user, a service provider, or the like.

[Formula 5]

$$G'_o = \sum_{k=1}^{K} Y_k^T Y_k \qquad \cdots (5)$$

$Y_k$ in Equation (5) is given by Equation (6). In the equation, k is a time step.
[Formula 6]

$$Y_k = [\Delta y(k, 1), \cdots, \Delta y(k, n)] \qquad \cdots (6)$$

The number n in Equation (6) represents the number of perturbations defined by the user. The perturbation will be described later.

In Equation (6), $\Delta y(k, n)$ is given by Equation (7). This indicates a difference of an observation vector y when a minute perturbation $\delta u_n$ is added to an initial value $x_0$.
[Formula 7]

$$\Delta y(k, n) = \frac{1}{2\rho} [y(t_k, x_0 + \rho \delta u_n) - y(t_k, x_0 - \rho \delta u_n)] \qquad \cdots (7)$$

In Equation (7), $\rho$ is the norm of the perturbation $\delta u_n$ and is given by Equation (8).
[Formula 8]

$$\rho = \|\delta u_n\| \qquad \cdots (8)$$

Note that, in the above example, the calculation unit 62 calculates an index value by using a function formula, but as a modification, the configuration may be such that an index value is calculated using a model trained by machine learning, a lookup table, or the like.

Hereinafter, an example of how to obtain the perturbation $\delta u_n$ will be described.

First, a variance-covariance matrix S of Equation (10) is defined for a Snapshot matrix X of Equation (9) in which the state vectors $x_t$ of a simulation are arranged in a manner that time evolution is taken in a column direction.
[Formula 9]

$$X = (x_1, x_2, \cdots, x_t) \qquad \cdots (9)$$

[Formula 10]

$$S = \frac{1}{t-1} X X^T \qquad \cdots (10)$$

Next, eigenvalue decomposition (main component analysis) of the variance-covariance matrix S is performed to obtain eigenvalues and eigenvectors. In order to simplify the calculation, singular value decomposition is actually performed under a condition of Equation (11), each value of a diagonal matrix $D^2$ in Equation (12) is set as an eigenvalue, and each column of U is set as an eigenvector.
[Formula 11]

$$X = UDV^T \quad \text{(where } U \text{ satisfies } U^T = U^{-1}, V \text{ satisfies } V^T = V^{-1}) \qquad \cdots (11)$$

[Formula 12]

$$XX^T = UD^2U^{-1} \quad \cdots(12)$$

Finally, obtained eigenvalues are arranged in descending order. The number c of eigenvalues to be used is optionally determined, and an eigenvector corresponding to an eigenvalue is set as a perturbation $\delta u_n$ (1 < n < c).

Note that a function of each element including the information processing unit 51 disclosed in the present disclosure can be executed using a circuit or a processing circuit including a general-purpose processor, a dedicated processor, an integrated circuit, an application specific integrated circuit (ASIC), a conventional circuit, and/or a combination of these configured or programmed to execute the disclosed function. A processor is regarded as a processing circuit or circuit because the processor includes a transistor and another circuit. In the present disclosure, a circuit, unit, or means is hardware that executes listed functions or is hardware programmed to perform listed functions. The hardware may be the hardware disclosed in the present description or may be other known hardware that is programmed or configured to execute listed functions. In a case where the hardware is a processor considered as a type of circuit, the circuit, means, or unit is a combination of hardware and software, and the software is used for configuration of hardware and/or the processor.

According to the design support device 50 of the present embodiment, an index value of contribution degree of an installation location of the measuring instrument 39 to accuracy of state estimation of the tank 7 is calculated, and result information including the calculated index value is output, so that an installation location of the measuring instrument 39 can be optimized according to accuracy of state estimation.

Further, since the plan information 72 includes the number of installation points of the measuring instrument 39, it is possible to optimize the number of installation points of the measuring instruments 39 according to accuracy of state estimation.

Further, by using the cost information 73, it is possible to optimize an installation location of the measuring instrument 39 according to installation cost of the measuring instrument 39.

Further, since the cost information 73 includes the article cost DB 81 and the construction cost DB 82, it is possible to calculate appropriate installation cost.

Further, since result information is image data of the screen 90 including a graph showing a correspondence relationship between the plan information 72 and an index value, it is possible to present the correspondence relationship between the plan information 72 and the index value to the user in an easy-to-understand manner.

Further, since the structure is a liquefied gas tank installed in a ship, it is possible to perform state estimation of the liquefied gas tank installed in the ship by using a highly accurate analysis model.

<Summary of present disclosure>

The embodiment of the present disclosure described above is summarized as follows.

An information processing method according to a first aspect of the present disclosure includes, by an information processing device, acquiring analysis model information for performing state estimation of a structure and plan information including an installation location of a measuring instrument for measuring a physical quantity related to a state of the structure, calculating an index value of contribution degree of the installation location to accuracy of the state estimation based on the acquired analysis model information and the acquired plan information, and outputting result information including the calculated index value.

According to the first aspect, an index value of contribution degree of an installation location of the measuring instrument to accuracy of state estimation of a structure is calculated, and result information including the calculated index value is output, so that an installation location of the measuring instrument can be optimized according to accuracy of state estimation.

In the information processing method according to a second aspect of the present disclosure, in the first aspect, the plan information preferably further includes a number of installation points of the measuring instruments.

According to the second aspect, it is possible to further optimize the number of installation points of the measuring instrument according to accuracy of state estimation.

The information processing method according to a third aspect of the present disclosure preferably further includes, in the first or second aspect, acquiring cost information related to installation cost required for installing the measuring instrument, and calculating a cost value necessary for installing the measuring instrument according to the plan information based on the cost information and the plan information, in which the result information preferably further includes the calculated cost value.

According to the third aspect, it is possible to further optimize an installation location of the measuring instrument according to installation cost of the measuring instrument.

# EP 4 711 970 A1

In the information processing method according to a fourth aspect of the present disclosure, in the third aspect, the installation cost preferably includes article cost according to a unit price of the measuring instrument and construction cost according to the installation location.

According to the fourth aspect, it is possible to calculate appropriate installation cost.

In an information processing method according to a fifth aspect of the present disclosure, in any one of the first to fourth aspects, the result information preferably includes a graph showing a correspondence relationship between the plan information and the index value.

According to the fifth aspect, a correspondence relationship between the plan information and the index value can be presented to the user in an easy-to-understand manner.

An information processing device according to a sixth aspect of the present disclosure includes an acquisition unit that acquires analysis model information for performing state estimation of a structure and plan information including an installation location of a measuring instrument for measuring a physical quantity related to a state of the structure, a calculation unit that calculates an index value of contribution degree of the installation location to accuracy of the state estimation based on the analysis model information and the plan information acquired by the acquisition unit, and an output unit that outputs result information including the index value calculated by the calculation unit.

According to the sixth aspect, an index value of contribution degree of an installation location of the measuring instrument to accuracy of state estimation of a structure is calculated, and result information including the calculated index value is output, so that an installation location of the measuring instrument can be optimized according to accuracy of state estimation.

A program according to a seventh aspect of the present disclosure is a program that causes an information processing device to function as acquiring means for acquiring analysis model information for performing state estimation of a structure and plan information including an installation location of a measuring instrument for measuring a physical quantity related to a state of the structure, calculating means for calculating an index value of contribution degree of the installation location to accuracy of the state estimation based on the analysis model information and the plan information acquired by the acquiring means, and outputting means for outputting result information including the index value calculated by the calculating means.

According to the seventh aspect, an index value of contribution degree of an installation location of the measuring instrument to accuracy of state estimation of a structure is calculated, and result information including the calculated index value is output, so that an installation location of the measuring instrument can be optimized according to accuracy of state estimation.

## Claims

1. An information processing method comprising:

   by an information processing device,
   acquiring analysis model information for performing state estimation of a structure and plan information including an installation location of a measuring instrument for measuring a physical quantity related to a state of the structure;
   calculating an index value of contribution degree of the installation location to accuracy of the state estimation based on the acquired analysis model information and the acquired plan information; and
   outputting result information including the calculated index value.

2. The information processing method according to claim 1, wherein the plan information further includes a number of installation points of the measuring instruments.

3. The information processing method according to claim 1, further comprising:

   acquiring cost information related to installation cost required for installing the measuring instrument; and
   calculating a cost value necessary for installing the measuring instrument according to the plan information based on the cost information and the plan information,
   wherein the result information further includes the calculated cost value.

4. The information processing method according to claim 3, wherein the installation cost includes article cost according to a unit price of the measuring instrument and construction cost according to the installation location.

5. The information processing method according to claim 1, wherein the result information includes a graph showing a correspondence relationship between the plan information and the index value.

6. An information processing device comprising:

an acquisition unit that acquires analysis model information for performing state estimation of a structure and plan information including an installation location of a measuring instrument for measuring a physical quantity related to a state of the structure;
a calculation unit that calculates an index value of contribution degree of the installation location to accuracy of the state estimation based on the analysis model information and the plan information acquired by the acquisition unit; and
an output unit that outputs result information including the index value calculated by the calculation unit.

7. A program for causing an information processing device to function as:

acquiring means for acquiring analysis model information for performing state estimation of a structure and plan information including an installation location of a measuring instrument for measuring a physical quantity related to a state of the structure;
calculating means for calculating an index value of contribution degree of the installation location to accuracy of the state estimation based on the analysis model information and the plan information acquired by the acquiring means; and
outputting means for outputting result information including the index value calculated by the calculating means.

# FIG.1

STATE ESTIMATION SYSTEM

35

DATA ASSIMILATION UNIT

CALCULATION UNIT

37

EVALUATION UNIT

1

33

MEASUREMENT UNIT

31

NOTIFICATION UNIT

43

7a

7

9

3

11

13

5

39

21 (LP)

39 19

23 (LP)

15

# FIG.2

<u>50</u>

# FIG.3

```
                    ┌──────────┐
                    │  START   │
                    └──────────┘
                          │
                          ▼                    SP01
        ┌──────────────────────────────────────┐
        │         ACQUIRE ANALYSIS MODEL        │
        │  INFORMATION, PLAN INFORMATION,       │
        │         AND COST INFORMATION          │
        └──────────────────────────────────────┘
                          │
                          ▼                    SP02
        ┌──────────────────────────────────────┐
        │         CALCULATE INDEX VALUE         │
        └──────────────────────────────────────┘
                          │
                          ▼                    SP03
        ┌──────────────────────────────────────┐
        │         CALCULATE COST VALUE          │
        └──────────────────────────────────────┘
                          │
                          ▼                    SP04
        ┌──────────────────────────────────────┐
        │        OUTPUT RESULT INFORMATION      │
        └──────────────────────────────────────┘
                          │
                          ▼
                    ┌──────────┐
                    │   END    │
                    └──────────┘
```

# FIG.4

90

O : MEASUREMENT PATTERN P1
□ : MEASUREMENT PATTERN P2
× : MEASUREMENT PATTERN P3

CONTOUR MAP

HIGH

LOW

CONTRIBUTION
DEGREE INDEX VALUE

L

0.8 — P1 ○ EMPLOYED

NOT
EMPLOYED

0.3 — P2 □

0.1 — P3 ×

O    30 40    60    COST
(TEN
THOUSAND
YEN)

## INTERNATIONAL SEARCH REPORT

| International application No. |
|---|
| **PCT/JP2024/020249** |

### A. CLASSIFICATION OF SUBJECT MATTER

*G06F 30/20*(2020.01)i; *B63B 25/16*(2006.01)i; *B63B 79/10*(2020.01)i; *B63B 79/30*(2020.01)i; *F17C 13/08*(2006.01)i; *G01M 99/00*(2011.01)i

FI:    G06F30/20; B63B25/16 Z; B63B79/10; B63B79/30; F17C13/08 302Z; G01M99/00 Z

According to International Patent Classification (IPC) or to both national classification and IPC

### B. FIELDS SEARCHED

Minimum documentation searched (classification system followed by classification symbols)

G06F30/00 - 30/398; B63B25/16; B63B79/10; B63B79/30; F17C13/08; G01M99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus (JDreamIII); IEEE Xplore

### C. DOCUMENTS CONSIDERED TO BE RELEVANT

| Category* | Citation of document, with indication, where appropriate, of the relevant passages | Relevant to claim No. |
|---|---|---|
| A | JP 2019-144182 A (HITACHI, LTD.) 29 August 2019 (2019-08-29)<br>entire text, all drawings | 1-7 |
| A | WO 2022/145287 A1 (KAWASAKI JUKOGYO KABUSHIKI KAISHA) 07 July 2022 (2022-07-07)<br>entire text, all drawings | 1-7 |
| A | WO 2020/149044 A1 (HITACHI, LTD.) 23 July 2020 (2020-07-23)<br>entire text, all drawings | 1-7 |
| A | WO 2022/107482 A1 (MITSUBISHI SHIPBUILDING CO., LTD.) 27 May 2022 (2022-05-27)<br>entire text, all drawings | 1-7 |
| A | JP 2015-94587 A (SEIKO EPSON CORPORATION) 18 May 2015 (2015-05-18)<br>entire text, all drawings | 1-7 |

☐ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/020249** |

| Patent document cited in search report | | | Publication date (day/month/year) | Patent family member(s) | | | Publication date (day/month/year) |
| --- | --- | --- | --- | --- | --- | --- | --- |
| JP | 2019-144182 | A | 29 August 2019 | GB | 2572841 | A | |
| | | | | entire text, all drawings | | | |
| WO | 2022/145287 | A1 | 07 July 2022 | EP | 4269227 | A1 | |
| | | | | entire text, all drawings | | | |
| | | | | CN | 116783113 | A | |
| | | | | KR | 10-2023-0135084 | A | |
| WO | 2020/149044 | A1 | 23 July 2020 | CN | 113168696 | A | |
| | | | | entire text, all drawings | | | |
| WO | 2022/107482 | A1 | 27 May 2022 | US | 2023/0229819 | A1 | |
| | | | | entire text, all drawings | | | |
| | | | | EP | 4144631 | A1 | |
| | | | | KR | 10-2023-0006529 | A | |
| | | | | CN | 115667066 | A | |
| JP | 2015-94587 | A | 18 May 2015 | US | 2015/0134271 | A1 | |
| | | | | entire text, all drawings | | | |
| | | | | CN | 104634551 | A | |

Form PCT/ISA/210 (patent family annex) (July 2022)

**EP 4 711 970 A1**

**Patent documents cited in the description**

- WO 2022145287 A